# FASCICULE DE BREVET EUROPEEN

(11) **EP 1 499 435 B1**
(45) Date de publication et mention de la délivrance du brevet: **01.03.2006**
(21) Numéro de dépôt: 02732842.6
(22) Date de dépôt: 29.04.2002
(51) Int. Cl.: B01J 19/02, B23K 1/012

(54) **PROCEDE DE FABRICATION D'UN ELEMENT DE DISPOSITIF CHIMIQUE COMPORTANT UNE PIECE SUPPORT EN METAL ET UN REVETEMENT METALLIQUE ANTI-CORROSION**
VERFAHREN ZUM HERSTELLEN EINES ELEMENTES EINER CHEMISCHEN VORRICHTUNG ENTHALTEND EIN METALLISCHES HALTEWERKSTÜCK UND METALLISCHE ANTIKORROSIONBESCHICHTUNG
METHOD FOR MAKING A CHEMICAL DEVICE ELEMENT COMPRISING A METAL SUPPORTING PART AND AN ANTI-CORROSIVE METAL COATING

(43) Date de publication de la demande: 26.01.2005
(73) Titulaire: Carbone Lorraine Equipements Genie Chimique, 54530 Pagny Sur Moselle (FR)
(72) Inventeur: TOTINO, Ernest, F-57130 Sainte Ruffine (FR); HUG, Christian, F-57950 Montigny les Metz (FR)
(74) Mandataire: Fénot, Dominique
(86) Numéro de dépôt international: PCT/FR2002/001490
(87) Numéro de publication internationale: WO 2003/097230

(56) Documents cités:
- EP-A- 0 785 042
- WO-A-94/06554
- US-A- 4 291 104
- US-A- 5 701 758

## Description

### Domaine de l'invention

L'invention concerne les dispositifs de manipulation, de stockage et de traitement de produits chimiques destinés aux industries chimiques. Elle concerne en particulier les mélangeurs, les dispositifs de traitement et les dispositifs d'acheminement aptes à manipuler des produits hautement corrosifs, tels que des acides ou bases concentrés. Dans la présente demande, l'expression "élément de dispositif chimique" désigne notamment, de manière collective, les enceintes de stockage, les réservoirs, les échangeurs de chaleur, les réacteurs, les mélangeurs, les dispositifs de traitement et les dispositifs d'acheminement.

L'invention concerne plus spécifiquement un procédé de fabrication de produits plaqués, tels que des éléments de dispositifs chimiques ou des pièces d'assemblage destinées à la fabrication d'éléments de dispositifs chimiques, comprenant au moins une pièce de support en métal et un revêtement métallique anti-corrosion.

### Etat de la technique

Les industries chimiques utilisent de nombreux éléments de dispositif chimique qui sont susceptibles de manipuler, stocker et/ou traiter des produits chimiques hautement corrosifs et qui doivent par conséquent être aptes à résister à l'attaque de ces derniers.

Afin de garantir une bonne tenue à la corrosion, les éléments de dispositif chimique comportent le plus souvent des pièces de support en acier et un revêtement métallique anti-corrosion à base de métaux dits « nobles », tels que du titane, du tantale, du zirconium, un alliage base nickel ou de l'acier inoxydable. Les éléments de dispositif chimique peuvent être fabriqués par assemblage de pièces d'assemblage, telles que des plaques, préalablement revêtues d'un revêtement métallique anti-corrosion. Le revêtement anti-corrosion peut être fixé à la pièce de support de différentes manières, telles que par moletage, explosion (« explosion clad »), calandrage à chaud ou simple habillage sans jonction entre la plaque et le revêtement anti-corrosion.

Certaines applications, telles que les dispositifs sous faible pression interne, nécessitent une liaison forte entre la pièce de support en métal et le revêtement anti-corrosion, c'est-à-dire une liaison qui présente une grande résistance à l'arrachement, de manière à éviter la séparation entre ceux-ci qui pourrait, par exemple, conduire à un affaissement (« collapsing» en anglais) du revêtement anti-corrosion. Le moletage, l'« explosion clad » et le calandrage permettent d'obtenir des liaisons support/revêtement très fortes mais ces techniques ne peuvent être utilisées lorsque l'épaisseur du revêtement anti-corrosion est inférieure à 0,7 mm.

Le brasage permet d'obtenir des liaisons support/revêtement très fortes et de réduire l'épaisseur du revêtement. Le brasage introduit en revanche des difficultés supplémentaires. En particulier, la différence de coefficient de dilation thermique entre le substrat et le matériau de revêtement (par exemple, le coefficient de dilatation de l'acier est environ deux fois plus élevé que celui du tantale) conduit à la formation de contraintes mécaniques. Ces contraintes fragilisent et déforment le revêtement. En outre, l'opération de brasage peut entraîner la formation de composés intermétalliques susceptibles de fragiliser la liaison entre le support et le revêtement. Ces difficultés sont exacerbées par les éventuelles opérations de mise en forme de la pièce de support revêtue, notamment par déformation plastique.

Le brevet US 4 291 104 de Fansteel enseigne d'utiliser des revêtements comportant des déformations préalables appelées « convolutions » afin de résoudre les problèmes de déformations aléatoires provoquées par les dilations différentielles entre le support et le revêtement. Cette solution n'empêche pas la formation de composés intermétalliques et diminue l'aire de l'interface entre le revêtement et le support, ce qui conduit à une fragilisation de la liaison support/revêtement. En outre, cette solution introduit de sérieux problèmes lors de la mise en forme ultérieure de la pièce revêtue. En particulier, il est difficilement concevable de calandrer, entre des rouleaux, des pièces revêtues de grande dimension lorsque le revêtement contient des déformations. Ces déformations sont en outre généralement fragilisées par l'écrasement subi lors des opérations de mise en forme.

La demanderesse a donc recherché une méthode pour fixer solidement un revêtement anti-corrosion de faible épaisseur sur une pièce de support en métal, qui est susceptible d'implantation industrielle, qui permette une déformation ultérieure de la pièce revêtue et qui puisse s'appliquer à des pièces de grandes dimensions (typiquement des plaques dont la surface est supérieure à environ 1 m²).

### Description de l'invention

L'invention a pour objet un procédé de fabrication d'un produit plaqué comprenant une pièce de support en métal (et de préférence en acier) et un revêtement métallique anti-corrosion, caractérisé en ce que le revêtement anti-corrosion est fixé sur la pièce de support par brasage sous atmosphère contrôlée, de manière à établir une jonction mécanique entre au moins une partie déterminée de la pièce de support et au moins une partie déterminée du revêtement.

La demanderesse a constaté que le procédé de l'invention permet de fixer solidement sur une pièce métallique, notamment en acier, un revêtement anti-corrosion ayant une épaisseur inférieure à 1 mm, voire inférieure à 0,5 mm, éventuellement inférieure ou égale à 0,3 mm.

Selon un premier aspect de l'invention, le produit plaqué est une pièce d'assemblage destinée à la fabrication d'un élément de dispositif chimique. Dans cet aspect de l'invention, le procédé de fabrication comprend :
- la fixation par brasage, dans une atmosphère contrôlée, d'un revêtement anti-corrosion sur une pièce de support (ou « pièce d'assemblage brute ») ;
- la mise en forme éventuelle de la pièce revêtue, par déformation plastique, de manière à produire une pièce d'assemblage (ou « pièce de forme ») revêtue.

Selon un deuxième aspect de l'invention, le produit plaqué est un élément de dispositif chimique. Dans cet aspect de l'invention, le procédé de fabrication comprend :
- la fixation, par brasage dans une atmosphère contrôlée, d'un revêtement anti-corrosion sur au moins une première et une deuxième pièces d'assemblage brutes ;
- une mise en forme desdites pièces revêtues par déformation plastique ;
- l'assemblage desdites pièces (typiquement par des opérations incluant du soudage) de manière à former ledit élément de dispositif chimique.

L'invention est particulièrement avantageuse lorsque les pièces d'assemblage sont mises en forme après avoir été revêtues du revêtement anti-corrosion, c'est-à-dire après fixation d'un revêtement anti-corrosion sur les pièces de support (ou « pièces d'assemblage brutes »). Cette variante de l'invention permet notamment de simplifier la manutention, le transport, le stockage et le traitement des pièces revêtues. Selon ce mode de réalisation avantageux de l'invention, la surface des pièces d'assemblage brutes destinée à être revêtue est typiquement essentiellement plane. Lesdites pièces peuvent comprendre des parties qui ont été préalablement mises en forme par usinage, perçage, alésage, déformation plastique ou tout autre moyen.

Dans un mode de réalisation préféré de l'invention, la fixation du revêtement anti-corrosion est effectuée par brasage à une température inférieure à environ 750°C, et de préférence comprise entre 600°C et 720°C, dans une atmosphère contrôlée, qui contient de préférence un gaz inerte de manière à éviter l'oxydation du revêtement au cours de brasage. La demanderesse a noté que le recours à des températures de brasage suffisamment basses permettait de limiter considérablement la déformation des revêtements qui sont provoquées par l'opération de brasage et qui proviennent de la dilatation différentielle entre la pièce brute et le revêtement. Il n'est alors pas nécessaire de pré-déformer le revêtement pour compenser l'effet de la dilatation différentielle.

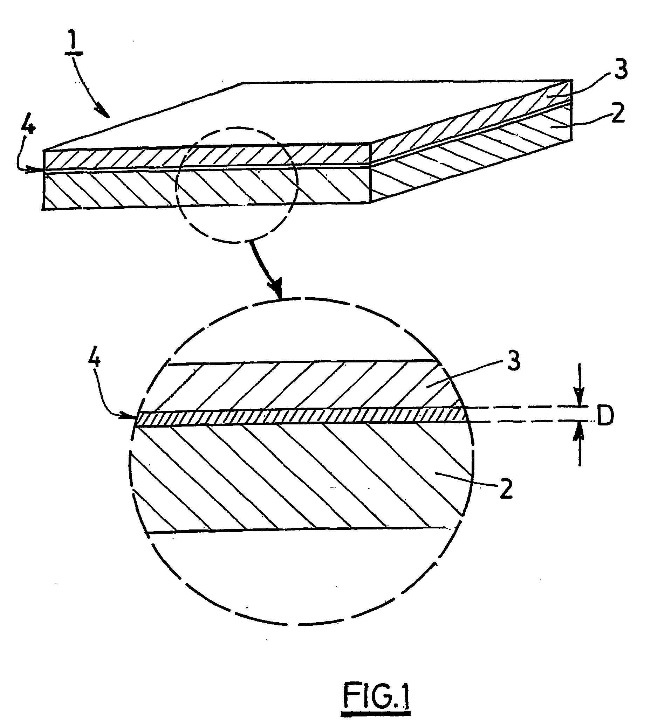

La figure 1 illustre de manière schématique une portion de produit plaqué selon l'invention.

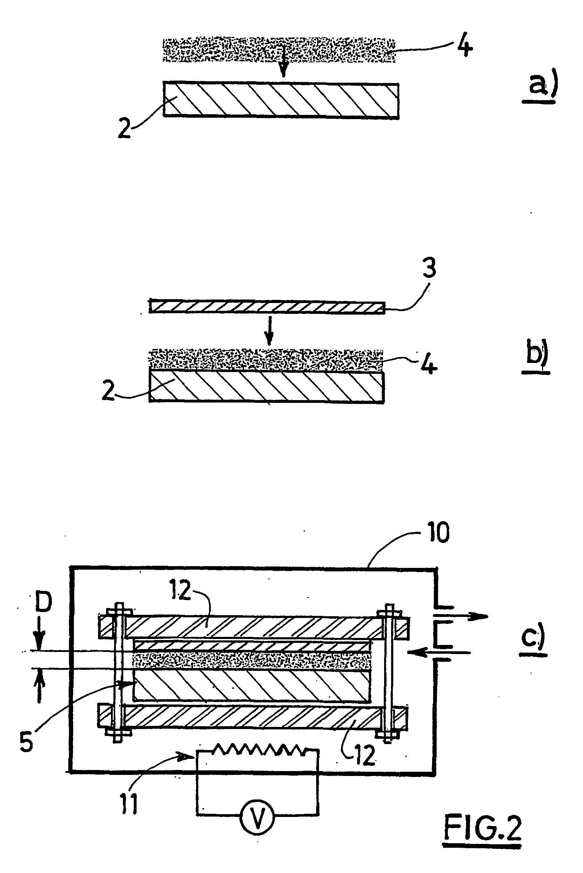

La figure 2 illustre de manière schématique un mode de réalisation du procédé de l'invention.

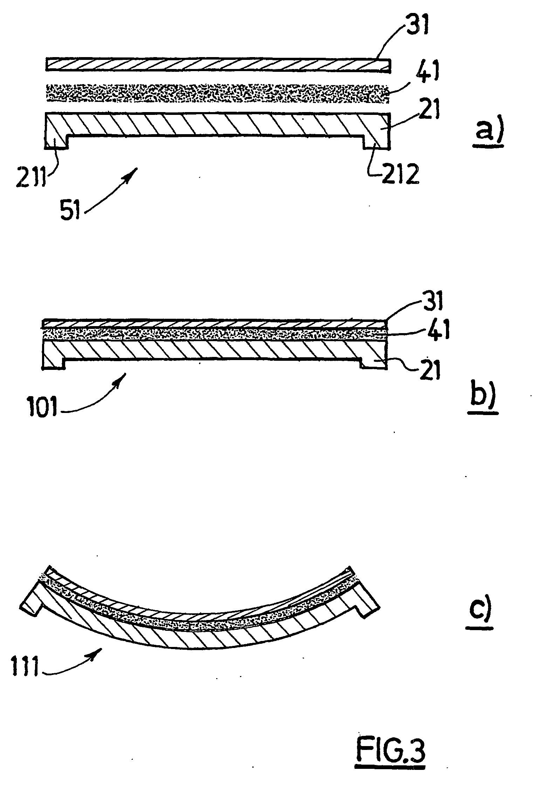

La figure 3 illustre de manière schématique le procédé de fabrication d'une pièce d'assemblage, vue en section, selon un mode de réalisation de l'invention.

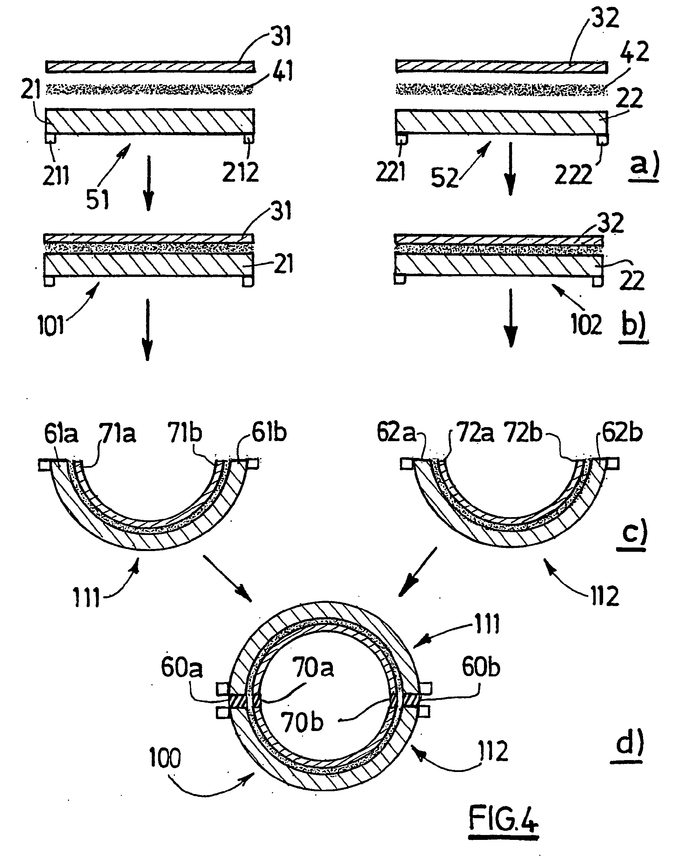

La figure 4 illustre de manière schématique le procédé de fabrication d'un élément de dispositif chimique, vu en section, selon un mode de réalisation de l'invention.
La figure 5 illustre de manière schématique le procédé de fabrication d'un élément de dispositif chimique, vu en section, selon une variante de l'invention.

### Description détaillée de l'invention

Selon l'invention, le procédé de fabrication d'une pièce d'assemblage (111, 112) destinée à la fabrication d'un élément de dispositif chimique (100), ladite pièce comportant une pièce de support en métal (2, 21, 22) et au moins un revêtement métallique anti-corrosion (3, 31, 32), comprend :
- la fixation d'un revêtement anti-corrosion (3, 31, 32) sur une pièce de support (2, 21, 22), par une opération comprenant une opération de brasage dans une atmosphère contrôlée ;
- éventuellement, la mise en forme de la pièce revêtue (101, 102), par déformation plastique, de manière à produire une pièce d'assemblage (ou « pièce de forme ») revêtue (111, 112).

Selon un mode de réalisation préféré de l'invention, le procédé de fabrication d'un élément de dispositif chimique (100) comprend :
- la production d'au moins une première (101) et une deuxième (102) pièces d'assemblage revêtues intermédiaires selon le procédé de l'invention ;
- la mise en forme des pièces revêtues intermédiaires (101, 102) par déformation plastique, de manière à produire des pièces d'assemblage revêtues (111, 112) ayant une forme déterminée ;
- la production d'un élément de dispositif chimique (100) par assemblage des pièces d'assemblage revêtues (111, 112).

Plus précisément, dans ce mode de réalisation, le procédé de fabrication d'un élément de dispositif chimique (100) comportant au moins une première et une deuxième pièces d'assemblage revêtues (111, 112), chaque dite pièce d'assemblage revêtue comprenant une pièce de support en métal (21, 22) et au moins un revêtement métallique anti-corrosion (31, 32), comprend :
- la fourniture d'au moins une première (21) et une deuxième (22) pièces de support ;
- la fixation d'un revêtement anti-corrosion (31, 32) sur chacune desdites pièces de support (21, 22), par un procédé comprenant une opération de brasage dans une atmosphère contrôlée et utilisant au moins un matériau de brasage (41, 42), de manière à produire des pièces revêtues intermédiaires (101, 102) ;
- la mise en forme des pièces revêtues intermédiaires (101, 102) par déformation plastique, de manière à produire des pièces d'assemblage revêtues (111, 112) ayant une forme déterminée ;
- l'assemblage des pièces d'assemblage revêtues (111, 112), typiquement par des opérations incluant du soudage, de manière à obtenir ledit élément de dispositif chimique (100).

L'atmosphère contrôlée dans ladite chambre (10) est de préférence constituée essentiellement de gaz inerte. L'atmosphère de gaz inerte est de préférence à une pression P déterminée. Cette atmosphère est typiquement formée par évacuation de l'atmosphère initiale de la chambre (typiquement jusqu'à une pression résiduelle comprise entre 0,1 et 1 Pa environ) et introduction dudit gaz inerte jusqu'à atteindre une pression P déterminée. Cette opération de purge peut être répétée plus d'une fois. Le gaz inerte peut être un gaz rare (typiquement de l'argon ou de l'hélium) ou de l'azote, ou un mélange de ceux-ci. La pression de gaz inerte dans la chambre (10) est typiquement comprise entre 10² et 10⁵ Pa (c'est-à-dire entre 1 mbar et 1 bar) environ. Une pression P faible permet de limiter l'impact défavorable des corps réactifs (tels que l'eau ou l'oxygène) éventuellement présents dans les gaz inertes industriels.

La mise en forme des pièces revêtues (101, 102) par déformation plastique est typiquement réalisée par roulage ou calandrage.

Dans un mode de réalisation préféré de l'invention, ladite opération de brasage comprend typiquement :
- l'interposition d'au moins un matériau de brasage (4, 41, 42) entre une pièce de support en métal (2, 21, 22) et un revêtement anti-corrosion (3, 31, 32), de manière à former un assemblage initial (5, 51, 52) ;
- éventuellement, l'application d'une pression de plaquage sur ledit assemblage initial (5, 51, 52) ;
- l'introduction de l'assemblage initial (5, 51, 52) dans une chambre à atmosphère contrôlée (10) munie d'au moins un moyen de chauffage (11), tel qu'une résistance ;
- la formation d'une atmosphère de gaz inerte dans ladite chambre (10) (et plus particulièrement au voisinage dudit assemblage) ;
- le réchauffement dudit ensemble (5, 51, 52) jusqu'à une température au moins égale à la température de brasage dudit matériau de brasage (4, 41, 42).

L'interposition du matériau de brasage (4, 41, 42) entre la pièce de support (2, 21, 22) et le revêtement anti-corrosion (3, 31, 32) peut être faite en deux étapes. En particulier, l'interposition peut comprendre :
- le dépôt du matériau de brasage (4, 41, 42) sur la pièce de support (2, 21, 22), au droit de la surface dite « de liaison » ;
- le positionnement du revêtement anti-corrosion (3, 31, 32) sur la pièce de support (2, 21, 22), de manière à former ledit assemblage initial (5, 51, 52).

Dans ce mode de réalisation préféré de l'invention, le procédé de fabrication d'un élément de dispositif chimique (100) est caractérisé en ce qu'il comprend :
- la fabrication de pièces d'assemblage revêtues intermédiaires (101, 102) selon un procédé comportant une opération de brasage comprenant :
   - la formation d'un assemblage initial (51, 52) comprenant une pièce de support (21, 22), un revêtement anti-corrosion (31, 32) et au moins un matériau de brasage (41, 42) entre la pièce de support et le revêtement ;
   - l'introduction de l'assemblage initial (51, 52) dans une chambre de brasage à atmosphère contrôlée (10) ;
   - la formation d'une atmosphère contrôlée dans ladite chambre (10) ;
   - le réchauffement dudit ensemble (51, 52) jusqu'à une température au moins égale à la température de brasage dudit matériau de brasage (41, 42), de manière à fixer par brasage le revêtement anti-corrosion (31, 32) sur la pièce de support (21, 22) ;
- la mise en forme desdites pièces revêtues intermédiaires (101, 102), par déformation plastique, de manière à obtenir lesdites pièces d'assemblage revêtues (111, 112);
- l'assemblage des pièces d'assemblage (ou « pièces de forme ») revêtues (111, 112), de manière à obtenir ledit élément de dispositif chimique (100).

Dans certains cas, il peut être avantageux d'effectuer d'abord le dépôt du matériau de brasage (4, 41, 42) sur le revêtement anti-corrosion (3, 31, 32), au droit de la surface dite « de liaison », et de positionner ensuite la pièce de support (2, 21, 22) sur le revêtement anti-corrosion, de manière à former ledit assemblage initial (5, 51, 52).

La température de brasage, qui est typiquement égale à la température de fusion du matériau de brasage, est telle que le matériau fond et produit une liaison intime avec l'élément avec lequel il est en contact (pièce de support en métal et/ou revêtement anti-corrosion). La température de brasage est de préférence inférieure à 750°C environ, et de préférence encore comprise entre 600°C et 720°C. Ces températures permettent de raccourcir la durée de l'opération de brasage.

L'opération de brasage comprend normalement le rapprochement des dites parties déterminées de manière à obtenir un espacement D qui est de préférence choisi de manière à éviter la formation de bulles de gaz ou de défauts de liaison entre les surfaces de liaison durant l'opération de brasage. L'espacement D est typiquement inférieur à 0,1 mm.

Le procédé comprend avantageusement l'application d'une pression de plaquage sur ledit assemblage initial (5, 51, 52) durant tout ou partie de l'opération de brasage. Plus précisément, il est avantageux d'appliquer une pression mécanique de plaquage sur ledit assemblage avant et/ou durant ledit réchauffement. Cette pression de plaquage est exercée de façon à ce que la pièce de support et le revêtement anti-corrosion soient serrées l'un contre l'autre et de façon à comprimer le matériau de brasage, ce qui permet notamment d'obtenir la valeur souhaitée pour l'espacement D entre la pièce de support et le revêtement. La pression de plaquage peut être appliquée par un système mécanique de serrage (12), tel qu'un système de tirants de ressorts et de plaques de serrage ou un système pneumatique (tel qu'un coussin gonflable). L'opération de brasage à basse température selon un mode de réalisation préféré de l'invention limite la dégradation du système mécanique de serrage (12). La pression de plaquage est typiquement supérieure à 0,1 MPa, de préférence supérieure à 0,3 MPa, et de préférence encore supérieure à 0,5 MPa.

Lesdites parties déterminées sont dites surfaces de liaison. La jonction entre la pièce de support et le revêtement peut être établie par plusieurs surfaces de liaisons.

La surface (et plus précisément la ou les surfaces de liaisons) des pièces de support (21, 22) et/ou des revêtements (31, 32) est avantageusement préalablement traitée, avant l'opération de brasage, de manière, notamment, à éliminer les oxydes de surface. On peut, par exemple, effectuer au moins un traitement choisi parmi les traitements chimiques, électrochimiques, physico-chimiques et mécaniques (tels qu'un décapage chimique ou électrochimique, un usinage ou un ponçage). Ces traitements peuvent être combinés. Dans le cas des pièces de support, le traitement concerne au moins la surface destinée à être revêtue.

Afin d'augmenter la solidité de la jonction, le procédé selon l'invention peut également comprendre le dépôt d'au moins une couche apte à améliorer l'adhérence du matériau de brasage et à limiter la formation de composés fragilisants. Le dépôt peut être effectué par voie chimique, par voie électrolytique ou en phase vapeur (dépôt chimique en phase vapeur ou physique en phase vapeur). Ladite couche est typiquement métallique, par exemple du titane ou du cuivre. Le dépôt peut être effectué sur la pièce de support (2, 21, 22), sur le revêtement métallique (3, 31, 32), ou les deux. Le dépôt est effectué avant l'opération de brasage.

Le matériau de brasage est de préférence réparti uniformément entre la pièce de support et le revêtement anti-corrosion afin d'obtenir une couche de liaison uniforme et d'augmenter la surface de contact entre ces deux éléments.

La pièce de support (2, 21, 22) est de préférence en acier. L'acier utilisé est généralement un acier au carbone ou un acier inoxydable.

Le revêtement métallique anti-corrosion (3, 31, 32) est typiquement en titane, en un alliage de titane, en tantale, en un alliage de tantale, en zirconium, en un alliage de zirconium, en alliage base nickel ou en acier inoxydable.

Le matériau de brasage (4, 41, 42) peut être un alliage fusible (typiquement un alliage eutectique) ou un métal fusible. Ledit matériau (4, 41, 42) contient éventuellement un flux. Il est avantageux que le matériau de brasage puisse diffuser dans l'élément avec lequel il est en contact, ce qui permet d'assurer une liaison très forte entre lesdits éléments. Le matériau de brasage se présente typiquement sous forme de poudre, d'un feuillard ou d'un treillis. Dans ses essais, la demanderesse a constaté que le treillis présente l'avantage de compenser efficacement les éventuelles variations de l'espacement D entre les surfaces de liaison.

Le matériau de brasage (4, 41, 42) est typiquement un matériau contenant de l'argent, du cuivre, du zinc, du cadmium ou de l'étain, ou un mélange de ces éléments, dont la température de brasage est inférieure à 750°C environ, et de préférence comprise entre 600°C et 720°C.

La pièce support (2, 21, 22) et le revêtement anti-corrosion (3, 31, 32) se présentent typiquement sous forme de plaque ou de tôle. Ces éléments peuvent être préalablement découpés, notamment pour former des ouvertures et des voies d'accès.

Les pièces de support ou pièces d'assemblages brutes (21, 22) peuvent en outre comprendre des moyens d'assemblage intégrés, tels que des protubérances (211, 212, 221, 222).

Les pièces de forme revêtues (111, 112) sont typiquement de formes bombées, semi-cylindriques ou autre.

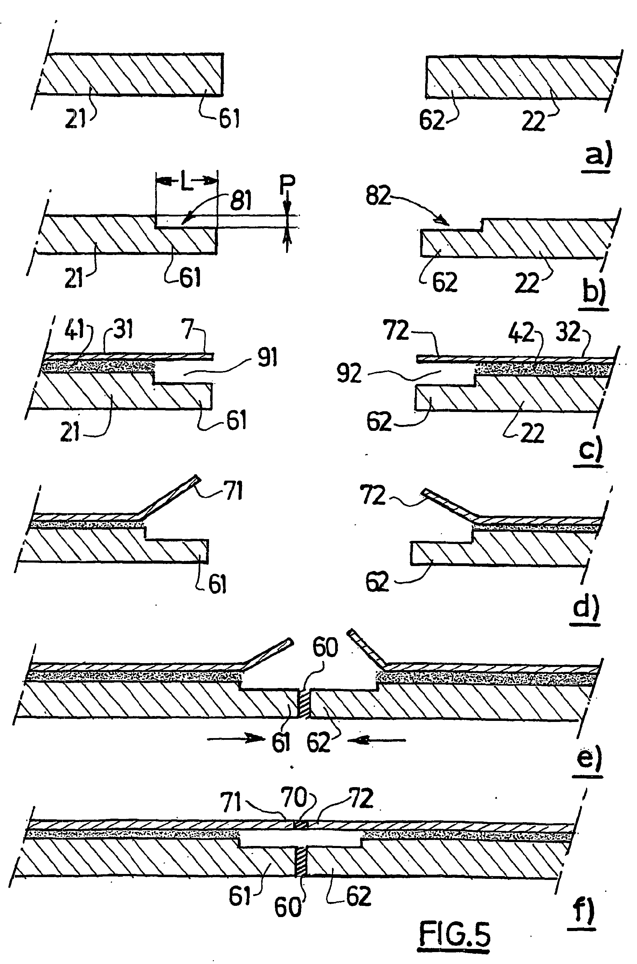

L'opération d'assemblage des pièces d'assemblage revêtues (111, 112), de manière à produire un élément de dispositif chimique (100), comprend la formation de joints (60, 60a, 60b, 70, 70a, 70b) entre lesdites pièces, typiquement par des opérations de soudage selon tout moyen connu. Les joints entre les pièces support (21, 22) sont normalement réalisés séparément des joints entre les pièces de revêtement (31, 32). Pour la réalisation de ces joints, la demanderesse a développé une variante particulièrement avantageuse du procédé selon l'invention dans laquelle les extrémités (61, 61a, 61b, 62, 62a, 62b) des pièces en métal (21, 22) sont préalablement évidées, typiquement par usinage, avant la fixation du revêtement, tel qu'illustré à la figure 5. Cette variante facilite considérablement la formation des joints entre les pièces d'assemblage. Elle permet en particulier de s'affranchir, après brasage, de l'usinage de la pièce de support qui serait autrement nécessaire pour réaliser les jonctions entre pièces de support.

Selon un mode de réalisation préféré de cette variante avantageuse de l'invention, le procédé de fabrication d'un élément de dispositif chimique comprend :
- la formation d'évidements (81, 82) aux extrémités (61, 62) desdites pièces de support (21, 22) destinées à être jointes avant l'opération de brasage, de manière à éviter le brasage entre chaque revêtement (31, 32) et chaque pièce de support (21, 22) au droit desdits évidements ;
- le dégagement des extrémités (71, 72) de chaque revêtement (31, 32), typiquement par un soulèvement de ces dernières extrémités (71, 72), après l'opération de brasage ;
- la formation d'un joint (60) entre les extrémités (61, 62) desdites pièces de support (21, 22), typiquement par soudage ;
- la formation d'un joint (70) entre les extrémités (71, 72) desdits revêtements (31, 32), typiquement par soudage.

La fixation des revêtements sur les pièces de support est effectuée selon les procédés décrits ci-dessus.

Les évidements (81, 82) ont pour fonction d'éviter le brasage entre les pièces de support (21, 22) et les revêtements (31, 32) à l'endroit où ils sont formés, appelé zone de séparation (91, 92) par la suite. Dans ce but, la profondeur P desdits évidements (81, 82) peut être relativement faible, soit typiquement entre 1 et 5 mm, ce qui évite de diminuer les caractéristiques mécaniques de la pièce support (21, 22). La largeur L desdits évidements (81, 82) est fixé de manière à permettre un dégagement facile de la zone de jonction entre les pièces de support. La longueur L est typiquement comprise entre 10 et 50 mm. L'évidement (81, 82) prend typiquement la forme d'une plage plane et parallèle au plan des extrémités (61, 62) des pièces de support (21, 22).

De manière plus précise, le procédé de fabrication d'un élément de dispositif chimique (100) selon cette variante avantageuse de l'invention comprend :
- la fourniture d'au moins une première (21) et d'une deuxième (22) pièces de support ;
- la formation d'évidements (81, 82) aux extrémités (61, 62) desdites pièces de support (21, 22) destinées à être jointes ;
- la fixation du revêtement (31, 32) sur chaque pièce de support (21, 22), par brasage dans une atmosphère contrôlée (de préférence à une température inférieure à 750°C, et de préférence encore comprise entre 600 et 720 °C), produisant ainsi des pièces d'assemblage revêtues intermédiaires (101, 102) ;
- la mise en forme (typiquement par roulage ou calandrage) des pièces revêtues intermédiaires (101, 102), produisant ainsi des pièces d'assemblage revêtues (111, 112) ;
- le dégagement des extrémités (71, 72) de chaque revêtement (31, 32), typiquement par un soulèvement de ces dernières extrémités (71, 72) ;
- la formation de joints (60) entre les extrémités (61, 62) desdites pièces de support (21, 22), typiquement par des opérations de soudage ;
- la formation de joints (70) entre les extrémités (71, 72) desdits revêtements (31, 32), typiquement par des opérations de soudage.

Ledit élément de dispositif chimique (100) est typiquement compris dans le groupe comprenant les enceintes de stockage, les réservoirs, les échangeurs de chaleur, les réacteurs, les mélangeurs, les dispositifs de traitement et les dispositifs d'acheminement.

### Exemple

Des essais de fabrication de pièces d'assemblage revêtues selon le procédé de l'invention ont été réalisés à partir de plaques en acier au carbone et de revêtements anti-corrosion en tantale. Le matériau de brasage était un alliage à base d'argent contenant du cuivre, du zinc et de l'étain. Une pression mécanique a été appliquée de façon continue durant l'opération de brasage. La température de brasage était inférieure à 700°C.

La jonction entre la plaque en acier et la tôle en tantale présentait très peu de défauts après brasage et une dureté qui n'excédait pas 150 Hv. Des tests de mise en forme, avec un faible rayon de courbure, ont montré l'absence de rupture dans la jonction.

### Avantages de l'invention

Les produits plaqués qui sont obtenus avec le procédé de l'invention présentent l'avantage d'une grande conductivité thermique transversale grâce à une liaison étroite entre pièce de support et revêtement anti-corrosion sur la plus grande partie de la surface de liaison, ce qui n'est pas le cas d'une liaison obtenue, par exemple, par moletage qui ne produit que des cordons de liaison. Une conductivité thermique transversale est particulièrement avantageuse dans les dispositifs chimiques comprenant des moyens de transfert thermique tels qu'un échangeur ou une double enveloppe de refroidissement ou de chauffage.

Les produits plaqués selon l'invention présentent également une bonne aptitude à la mise en forme et par conséquent permettent de fabriquer aisément des éléments de dispositifs chimiques.

Le procédé de fabrication permet de s'affranchir de l'étape d'usinage de la pièce support lors des opérations ultérieures de soudage pour fabriquer les éléments de dispositifs chimiques.

### Liste des références numériques

- 1: Produit plaqué
- 100: Elément de dispositif chimique
- 101, 102: Pièce d'assemblage revêtue intermédiaire
- 111, 112: Pièce d'assemblage revêtue
- 2: Pièce de support en métal
- 21,22: Pièce de support ou pièce d'assemblage brute
- 211,212,221,222: Moyens d'assemblage intégrés
- 3,31,32: Revêtement
- 4, 41, 42: Matériau de brasage
- 5,51,52: Assemblage initial
- 60: Joint entre des plaques support
- 61, 61a, 61b, 62, 62a, 62b: Extrémité d'une pièce d'assemblage
- 70: Joint entre des revêtements
- 71, 71a, 71b, 72, 72a, 72b: Extrémité d'un revêtement
- 81, 82: Evidements
- 91, 92: Zone de séparation
- 10: Chambre à atmosphère contrôlée
- 11: Moyen de chauffage
- 12: Système de serrage

## Revendications

1. Procédé de fabrication d'un élément de dispositif chimique (100) comportant au moins une première et une deuxième pièces d'assemblage revêtues (111, 112), chaque dite pièce d'assemblage revêtue comprenant une pièce de support en métal (21, 22) et au moins un revêtement métallique anti-corrosion (31, 32), ledit procédé étant **caractérisé en ce qu'**il comprend les étapes successives suivantes :
• la fabrication de pièces d'assemblage revêtues intermédiaires (101,102) selon un procédé comportant une opération de brasage comprenant :
- la formation d'un assemblage initial (51, 52) comprenant une pièce de support (21, 22), un revêtement anti-corrosion (31, 32) et au moins un matériau de brasage (41, 42) entre la pièce de support et le revêtement ;
- l'introduction de l'assemblage initial (51, 52) dans une chambre de brasage à atmosphère contrôlée (10) ;
- la formation d'une atmosphère contrôlée dans ladite chambre (10) ;
- le réchauffement dudit ensemble (51, 52) jusqu'à une température au moins égale à la température de brasage dudit matériau de brasage (41, 42), de manière à fixer par brasage le revêtement anti-corrosion (31, 32) sur la pièce de support (21,22) ;
• la mise en forme desdites pièces revêtues intermédiaires (101, 102) de manière à obtenir lesdites pièces d'assemblage revêtues (111, 112);
• l'assemblage des pièces d'assemblage revêtues (111, 112) de manière à obtenir ledit élément de dispositif chimique (100).

2. Procédé de fabrication selon la revendication 1, **caractérisé en ce que** la température de brasage est inférieure à 750°C environ.

3. Procédé de fabrication selon la revendication 2, **caractérisé en ce que** la température de brasage est comprise entre 600°C et 720°C.

4. Procédé de fabrication selon l'une quelconque des revendications 1 à 3, **caractérisée en ce que** l'atmosphère contrôlée est constituée essentiellement de gaz inerte.

5. Procédé de fabrication selon la revendication 4, **caractérisé en ce que** le gaz inerte est choisi dans le groupe comprenant les gaz rares, l'azote et les mélanges de ceux-ci.

6. Procédé de fabrication selon l'une quelconque des revendications 1 à 5, **caractérisé en ce que** l'atmosphère contrôlée de la chambre (10) est une pression P comprise entre 10² et 10⁵ Pa environ durant le brasage.

7. Procédé de fabrication selon l'une quelconque des revendications 1 à 6, **caractérisé en ce qu'**il comprend en outre l'application d'une pression de plaquage sur ledit assemblage initial (51, 52) durant tout ou partie de l'opération de brasage.

8. Procédé de fabrication selon la revendication 7, **caractérisé en ce que** la pression de plaquage est supérieure à 0,1 MPa, de préférence supérieure à 0,3 MPa, et de préférence encore supérieure à 0,5 MPa.

9. Procédé de fabrication selon l'une quelconque des revendications 1 à 8, **caractérisé en ce qu'**il comprend en outre au moins un traitement préalable de la surface desdites pièces de support (21, 22) destinée à être revêtue et **en ce que** ce traitement est choisi dans le groupe comprenant les traitements chimiques, électrochimiques, physico-chimiques, mécaniques et les combinaisons de ceux-ci.

10. Procédé de fabrication selon l'une quelconque des revendications 1 à 9, **caractérisé en ce qu'**il comprend en outre le dépôt d'au moins une couche apte à améliorer l'adhérence du matériau de brasage et à limiter la formation de composés fragilisants.

11. Procédé de fabrication selon la revendication 10, **caractérisé en ce que** ladite couche est métallique.

12. Procédé de fabrication selon la revendication 10 ou 11, **caractérisé en ce que** le dépôt est effectué par voie chimique, par voie électrolytique ou en phase vapeur.

13. Procédé de fabrication selon l'une quelconque des revendications 1 à 12, **caractérisé en ce que** l'épaisseur dudit revêtement (31, 32) est inférieure à 1 mm.

14. Procédé de fabrication selon l'une quelconque des revendications 1 à 12, **caractérisé en ce que** l'épaisseur dudit revêtement (31, 32) est inférieure à 0,5 mm.

15. Procédé de fabrication selon l'une quelconque des revendications 1 à 14, **caractérisé en ce que** ledit revêtement (31, 32) est en un métal choisi dans le groupe comprenant le tantale, les alliages de tantale, le titane, les alliages de titane, le zirconium, les alliages de zirconium, les alliages base nickel et les aciers inoxydables.

16. Procédé de fabrication selon l'une quelconque des revendications 1 à 15, **caractérisé en ce que** le matériau de brasage (41, 42) contient de l'argent, du cuivre, du zinc, du cadmium ou de l'étain, ou un mélange de ces éléments.

17. Procédé de fabrication selon l'une quelconque des revendications 1 à 16, **caractérisé en ce que** le matériau de brasage se présente sous forme de poudre, d'un feuillard ou d'un treillis.

18. Procédé de fabrication selon l'une quelconque des revendications 1 à 17, **caractérisé en ce que** ladite pièce de support (21, 22) est en acier.

19. Procédé de fabrication selon la revendication 18, **caractérisé en ce que** ledit acier est un acier au carbone ou un acier inoxydable.

20. Procédé de fabrication selon l'une quelconque des revendications 1 à 19, **caractérisé en ce que** ladite pièce support (21, 22) se présente sous forme de plaque ou de tôle.

21. Procédé de fabrication selon l'une quelconque des revendications 1 à 20, **caractérisé en ce que** ledit revêtement (31, 32) se présente sous forme de plaque ou de tôle.

22. Procédé de fabrication selon l'une quelconque des revendications 1 à 21, **caractérisé en ce qu'**il comprend en outre :
- la formation d'évidements (81, 82) aux extrémités (61, 62) de chaque pièce de support (21, 22) destinées à être jointes avant l'opération de brasage, de manière à éviter le brasage entre chaque revêtement (31, 32) et chaque pièce de support (21, 22) au droit desdits évidements ;
- le dégagement des extrémités (71, 72) de chaque revêtement (31, 32) après l'opération de brasage ;
- la formation d'un joint (60) entre les extrémités (61, 62) desdites pièces de support (21, 22) ;
- la formation d'un joint (70) entre les extrémités (71, 72) desdits revêtements (31,32).

23. Procédé de fabrication selon la revendication 22, **caractérisé en ce que** les joints (60) entre les extrémités (61, 62) desdites pièces de support (21, 22) et les joints (70) entre les extrémités (71, 72) desdits revêtements (31, 32) sont réalisés par soudage.

24. Procédé de fabrication selon l'une quelconque des revendications 1 à 23, **caractérisé en ce que** ledit élément de dispositif chimique (100) est choisi dans le groupe comprenant les enceintes de stockage, les réservoirs, les échangeurs de chaleur, les réacteurs, les mélangeurs, les dispositifs de traitement et les dispositifs d'acheminement.

## Claims

1. Method for making a chemical device element (100) comprising at least one first and one second coated assembly part (111, 112), each said coated assembly part comprising a metal supporting part (21, 22) and at least one metallic anti-corrosive coating (31,32), the said method being **characterised in that** it comprises the following successive steps:
• manufacturing of intermediate coated assembly parts (101, 102) according to a method comprising a brazing operation including:
- formation of an initial assembly (51, 52) comprising a supporting part (21, 22), an anti-corrosive coating (31, 32) and at least one brazing material (41, 42) between the supporting part and the coating;
- introduction of the initial assembly (51, 52) into a brazing chamber with controlled atmosphere (10);
- formation of a controlled atmosphere in the said chamber (10);
- heating of the said assembly (51, 52) to a temperature equal to at least the brazing temperature of the said brazing material (41, 42) so as to fix the anti-corrosive coating (31, 32) on the supporting part (21, 22) by brazing;
• forming of the said intermediate coated parts (101, 102), so as to obtain the said coated assembly parts (111, 112);
• assembly of the coated assembly parts (111, 112), so as to obtain the said chemical device element (100).

2. Manufacturing method according to claim 1, **characterised in that** the brazing temperature is less than approximately 750°C.

3. Manufacturing method according to claim 2, **characterised in that** the brazing temperature is between 600°C and 720°C.

4. Manufacturing method according to any one of claims 1 to 3, **characterised in that** the controlled atmosphere is composed essentially of inert gas.

5. Manufacturing method according to claim 4, **characterised in that** the inert gas is chosen from the group comprising rare gasses, nitrogen and mixes of them.

6. Manufacturing method according to any one of claims 1 to 5, **characterised in that** the controlled atmosphere in the chamber (10) is a pressure P between approximately 10² and 10⁵ Pa during brazing.

7. Manufacturing method according to any one of claims 1 to 6, **characterised in that** it also comprises application of a cladding pressure on the said initial assembly (51, 52) during all or part of the brazing operation.

8. Manufacturing method according to claim 7, **characterised in that** the cladding pressure is more than 0.1 MPa, preferably more than 0.3 MPa, and even better more than 0.5 MPa.

9. Manufacturing method according to any one of claims 1 to 8, **characterised in that** it also comprises at least one prior surface treatment of the said supporting parts (21, 22) to be coated, and **in that** this treatment is chosen from the group comprising chemical, electrochemical, physicochemical and mechanical treatments and combinations of them.

10. Manufacturing method according to any one of claims 1 to 9, **characterised in that** it also comprises deposition of at least one coat that could improve the bond of the brazing material and limit the formation of weakening compounds.

11. Manufacturing method according to claim 10, **characterised in that** the said coat is metallic.

12. Manufacturing method according to claim 10 or 11, **characterised in that** the deposition is made chemically, electrolytically or by vapour phase.

13. Manufacturing method according to any one of claims 1 to 12, **characterised in that** the said coating (31, 32) is less than 1 mm thick.

14. Manufacturing method according to any one of claims 1 to 12, **characterised in that** the said coating (31, 32) is less than 0.5 mm thick.

15. Manufacturing method according to any one of claims 1 to 14, **characterised in that** the said coating (31, 32) is a metal chosen from the group comprising tantalum, tantalum alloys, titanium, titanium alloys, zirconium, zirconium alloys, nickel-based alloys or stainless steels.

16. Manufacturing method according to any one of claims 1 to 15, **characterised in that** the brazing material (41, 42) contains silver, copper, zinc, cadmium or tin, or a mix of these elements.

17. Manufacturing method according to any one of claims 1 to 16, **characterised in that** the brazing material is in the form of a powder, a sheet or a lattice.

18. Manufacturing method according to any one of claims 1 to 17, **characterised in that** the said supporting part (21, 22) is a steel part.

19. Manufacturing method according to claim 18, **characterised in that** the said steel is a carbon steel or a stainless steel.

20. Manufacturing method according to any one of claims 1 to 19, **characterised in that** the said supporting part (21, 22) is in the form of a plate or a sheet metal.

21. Manufacturing method according to any one of claims 1 to 20, **characterised in that** the said coating (31, 32) is in the form of a plate or a sheet metal.

22. Manufacturing method according to any one of claims 1 to 21, **characterised in that** it also comprises:
- the formation of recesses (81, 82) at the ends (61, 62) of each supporting part (21, 22) that will be joined together before the brazing operation, so as to prevent brazing between each coating (31, 32) and each supporting part (21, 22) adjacent to the said recesses;
- moving the ends (71, 72) of each coating (31, 32) clear, after the brazing operation;
- the formation of a joint (60) between the ends (61, 62) of the said supporting parts (21, 22);
- the formation of a joint (70) between the ends (71, 72) of the said coatings (31, 32).

23. Manufacturing method according to claim 22, **characterised in that** the joints (60) between the ends (61, 62) of the said supporting parts (21, 22) and the joints (70) between the ends (71, 72) of the said coatings (31, 32) are made by welding.

24. Manufacturing method according to any one of claims 1 to 23, **characterised in that** the said chemical device element (100) is chosen from the group comprising storage containments, tanks, heat exchangers, reactors, mixers, treatment devices and conveyance devices.

## Patentansprüche

1. Verfahren zum Herstellen eines Elementes (100) einer chemischen Vorrichtung enthaltend mindestens ein erstes und ein zweites beschichtetes Verbindungsstück (111, 112), wobei jedes beschichtete Verbindungsstück ein metallisches Trägerstück (21, 22) und mindestens eine metallische Antikorrosionsbeschichtung (31, 32) aufweist, welches Verfahren **dadurch gekennzeichnet ist, dass** es die folgenden aufeinander folgenden Schritte umfasst:
• Herstellung beschichteter Verbindungsvorprodukte (101, 102) nach einem einen Lötvorgang enthaltenden Verfahren umfassend:
- die Herstellung einer Grundanordnung (51, 52) enthaltend ein Trägerstück (21, 22), eine Antikorrosionsbeschichtung (31, 32) und mindestens einen Lötwerkstoff (41, 42) zwischen Trägerstück und Beschichtung;
- die Einbringung der Grundanordnung (51, 52) in eine Lötkammer mit kontrollierter Atmosphäre (10);
- die Bildung einer kontrollierten Atmosphäre in der Kammer (10);
- die Erwärmung der Anordnung (51, 52) auf eine mindestens der Löttemperatur des Lötwerkstoffs (41, 42) entsprechende Temperatur, um die Antikorrosionsbeschichtung (31, 32) auf das Trägerstück (21, 22) aufzulöten;
• Formgebung der beschichteten Vorprodukte (101, 102), um die beschichteten Verbindungsstücke (111, 112) zu erhalten;
• Zusammenbau der beschichteten Verbindungsstücke (111, 112), um das Element (100) einer chemischen Vorrichtung zu erhalten.

2. Herstellungsverfahren nach Anspruch 1, **dadurch gekennzeichnet, dass** die Löttemperatur niedriger als etwa 750°C ist.

3. Herstellungsverfahren nach Anspruch 2, **dadurch gekennzeichnet, dass** die Löttemperatur 600°C bis 720°C beträgt.

4. Herstellungsverfahren nach irgendeinem der Ansprüche 1 bis 3, **dadurch gekennzeichnet, dass** die kontrollierte Atmosphäre im Wesentlichen aus Schutzgas besteht.

5. Herstellungsverfahren nach Anspruch 4, **dadurch gekennzeichnet, dass** das Schutzgas aus der Gruppe bestehend aus den Edelgasen, Stickstoff und deren Gemischen gewählt ist.

6. Herstellungsverfahren nach irgendeinem der Ansprüche 1 bis 5, **dadurch gekennzeichnet, dass** die kontrollierte Atmosphäre der Kammer (10) unter einem Druck P von etwa 10² bis 10⁵ Pa während des Lötens steht.

7. Herstellungsverfahren nach irgendeinem der Ansprüche 1 bis 6, **dadurch gekennzeichnet, dass** es zusätzlich das Anwenden eines Pressdrucks auf die Grundanordnung (51, 52) während des ganzen oder eines Teils des Lötvorgangs umfasst.

8. Herstellungsverfahren nach Anspruch 7, **dadurch gekennzeichnet, dass** der Pressdruck höher als 0,1 MPa, vorzugsweise höher als 0,3 MPa und besonders bevorzugt höher als 0,5 MPa ist.

9. Herstellungsverfahren nach irgendeinem der Ansprüche 1 bis 8, **dadurch gekennzeichnet, dass** es zusätzlich mindestens eine Vorbehandlung der zu beschichtenden Oberfläche der Trägerstücke (21, 22) umfasst und dass diese Behandlung aus der Gruppe bestehend aus den chemischen, elektrochemischen, physikalisch-chemischen und mechanischen Behandlungen und deren Kombinationen gewählt ist.

10. Herstellungsverfahren nach irgendeinem der Ansprüche 1 bis 9, **dadurch gekennzeichnet, dass** es zusätzlich die Abscheidung mindestens einer Schicht umfasst, welche das Haften des Lötwerkstoffs zu verbessern und die Bildung versprödender Verbindungen zu reduzieren vermag.

11. Herstellungsverfahren nach Anspruch 10, **dadurch gekennzeichnet, dass** die Schicht metallisch ist.

12. Herstellungsverfahren nach Anspruch 10 oder 11, **dadurch gekennzeichnet, dass** die Abscheidung chemisch, elektrolytisch oder aus der Dampfphase erfolgt.

13. Herstellungsverfahren nach irgendeinem der Ansprüche 1 bis 12, **dadurch gekennzeichnet, dass** die Dicke der Beschichtung (31, 32) geringer als 1 mm ist.

14. Herstellungsverfahren nach irgendeinem der Ansprüche 1 bis 12, **dadurch gekennzeichnet, dass** die Dicke der Beschichtung (31, 32) geringer als 0,5 mm ist.

15. Herstellungsverfahren nach irgendeinem der Ansprüche 1 bis 14, **dadurch gekennzeichnet, dass** die Beschichtung (31, 32) aus einem Metall ist, gewählt aus der Gruppe bestehend aus Tantal, den Tantallegierungen, Titan, den Titanlegierungen, Zirkonium, den Zirkoniumlegierungen, den Legierungen auf Basis von Nickel und den rostfreien Stählen.

16. Herstellungsverfahren nach irgendeinem der Ansprüche 1 bis 15, **dadurch gekennzeichnet, dass** der Lötwerkstoff (41, 42) Silber, Kupfer, Zink, Kadmium oder Zinn oder ein Gemisch dieser Elemente enthält.

17. Herstellungsverfahren nach irgendeinem der Ansprüche 1 bis 16, **dadurch gekennzeichnet, dass** der Lötwerkstoff in Form von Pulver, Band oder Draht vorliegt.

18. Herstellungsverfahren nach irgendeinem der Ansprüche 1 bis 17, **dadurch gekennzeichnet, dass** das Trägerstück (21, 22) aus Stahl ist.

19. Herstellungsverfahren nach Anspruch 18, **dadurch gekennzeichnet, dass** der Stahl ein Kohlenstoffstahl oder ein rostfreier Stahl ist.

20. Herstellungsverfahren nach irgendeinem der Ansprüche 1 bis 19, **dadurch gekennzeichnet, dass** das Trägerstück (21, 22) als Platte oder Blech ausgebildet ist.

21. Herstellungsverfahren nach irgendeinem der Ansprüche 1 bis 20, **dadurch gekennzeichnet, dass** die Beschichtung (31, 32) als Platte oder Blech ausgebildet ist.

22. Herstellungsverfahren nach irgendeinem der Ansprüche 1 bis 21, **dadurch gekennzeichnet, dass** es weiterhin umfasst:
- die Bildung von Ausnehmungen (81, 82) an den zu verbindenden Enden (61, 62) jedes Trägerstücks (21, 22) vor dem Lötvorgang, um das Löten zwischen jeder Beschichtung (31, 32) und jedem Trägerstück (21, 22) auf gleicher Höhe mit den Ausnehmungen zu vermeiden;
- die Freilegung der Enden (71, 72) jeder Beschichtung (31, 32) nach dem Lötvorgang;
- die Herstellung einer Verbindung (60) zwischen den Enden (61, 62) der Trägerstücke (21, 22);
- die Herstellung einer Verbindung (70) zwischen den Enden (71, 72) der Beschichtungen (31, 32).

23. Herstellungsverfahren nach Anspruch 22, **dadurch gekennzeichnet, dass** die Verbindungen (60) zwischen den Enden (61, 62) der Trägerstücke (21, 22) und die Verbindungen (70) zwischen den Enden (71, 72) der Beschichtungen (32, 32) durch Schweißen hergestellt werden.

24. Herstellungsverfahren nach irgendeinem der Ansprüche 1 bis 23, **dadurch gekennzeichnet, dass** das Element (100) einer chemischen Vorrichtung aus der Gruppe der Vorratsbehälter, Reservoirs, Wärmetauscher, Reaktoren, Mischer, Behandlungsvorrichtungen und Zuführungsvorrichtungen gewählt ist.
